Europäisches Patentamt

European Patent Office

Office européen des brevets

(11) Publication number: **0 104 514**
**B1**

# (12) EUROPEAN PATENT SPECIFICATION

(45) Date of publication of patent specification: **12.12.90**

(51) Int. Cl.⁵: **H 02 G 7/12, H 02 G 7/14**

(21) Application number: **83108813.3**

(22) Date of filing: **07.09.83**

(54) **Spacer-damper for a bundled conductor of an electric line.**

(30) Priority: **17.09.82 IT 2331582**

(43) Date of publication of application:
**04.04.84 Bulletin 84/14**

(45) Publication of the grant of the patent:
**12.12.90 Bulletin 90/50**

(84) Designated Contracting States:
**AT BE CH DE FR GB LI NL SE**

(56) References cited:
**FR-A-2 115 198**
**FR-A-2 152 533**
**US-A-3 979 553**

(73) Proprietor: **OFFICINA FRATELLI BERTOLOTTI
S.p.A.
4, Via Milano
Volpiano (TO) (IT)**

(72) Inventor: **Riganti, Innocente
1, Via Vittorio Veneto
I-21048 Solbiate Arno (VA) (IT)**

(74) Representative: **Ferraiolo, Ruggero
Via Napo Torriani, 10
I-20124 Milano (IT)**

Courier Press, Leamington Spa, England.

## Description

The invention relates to a spacer-damper for a bundled conductor of an electric line according to the precharacterising part of Claim 1.

In the bundled conductors of high and very high tension electric lines, namely in the conductors composed by two or more sub-conductors for each electric phase, it is required to keep correct the mutual spacing of the sub-conductors along each span between two subsequent towers as well as all along an electric line and also it is required to damp the movements of the single sub-conductors, substantially aeolian vibrations, namely vibrations having high frequency and small amplitudes caused by weak winds, and violent and large amplitude oscillations caused by strong winds.

The spacer dampers are devices which are mounted on the electric lines in order to face both the above requirements and the applicant cites the single joint spacer-damper as disclosed through the Italian Patent No 936.310 filed by S.A.S. Officine Meccaniche Innocente Riganti di Innocente e Franco Riganti & C. of Solbiate Arno (Italy) and the multiple joint spacer-dampers produced by the Italian firms DAMP of Sovere and SALVI A. & C. of Milano.

The main disadvantages of the known spacer-damper of the first cited manufacturer reside in that, due to the sole joint, each arm is allowed to make angular movements only, or on the other hand angular oscillations having their center in the joint center; in particular, there is no possibility of movements in the direction of the arm axis. The main disadvantages of the known spacer-dampers of the two other cited manufacturers reside in that they are allowed to make movements in numberless directions, but only in the plane perpendicular with the longitudinal axis of the sub-conductors. Moreover, in all the known devices as cited above the joint rigidity is nearly constant under aeolian vibrations so that the damping effect depends only on the hysteresis of the elastic means comprised in the joints and almost all the dissipated energy is transformed in heat which damages said elastic means. Furthermore, as in almost all the said devices the elastic means made of elastomer are compressed, it is cited a further disadvantage residing in that the performances of such devices vary remarkably depending on the external temperature.

Finally, the prestress of said elastic means causes a high rigidity of the joints and, consequently, said devices are not sensitive to small exciting forces.

The document US—A—3 979 553 and FR—A—2 115 198 are known. The first doucument discloses a spacer-damper which comprises abutments each having a recess receiving elastic means in the form of bushes or washers holding elastically a clamp bearing arm. The elastic means lie with their center lines parallel with the subconductors and are subject to torsional shear under operation. The second document discloses a spacer-damper which comprises an arrangment which makes elastic the connection between a support and a clamp bearing arm by means of tightly wound helical steel springs having their center lines parallel with the subconductors.

The stated problem is overcome by means of a spacer-damper according to the characterising part of Claim 1.

According to a first alternative, each joint between the support and an arm comprises: two frames integral with or fixed to the support and contained in a plane which is parallel with the support containing plane, a core positioned within each frame, a plurality of elastic elements for each frame, each elastic element having one end fixed to the corresponding frame and the other end fixed to the corresponding core for keeping the core itself elastically within the frame, the elastic elements for each frame being symmetrically located around the periphery of the core, an arm which bears on one end a clamp for clamping a sub-conductor and which bears on the opposite end means for fixing to each core.

According to a second alternative, each joint between the support and an arm comprises: two frames integral with or fixed to the support and contained in planes coincident with or parallel to a plane containing the support, a core positioned within each frame, a plurality of elastic elements for each frame, each elastic element having one end fixed to the corresponding frame and the other end fixed to the corresponding core for keeping the core itself elastically within the frame, the elastic elements for each frame being symmetrically located around the periphery of the core, an arm which bears on one end a clamp for clamping a sub-conductor and which bears on the opposite end two branches each for fixing to each core.

The elastic elements are bodies made of elastomer or are steel springs, both of them being adapted to be compressed, extended, bent and twist under the actions transmitted from the sub-conductors through the arms.

The fixing of the elastomer elastic elements to the core and the frame (or to small plates fastened to the frame) is made by gluing or by mechanical fastening means, like for instance by flange extensions in the ends of the elastic elements, conveniently engaged in corresponding recesses in the core and in the frame. Similarly, the fixing of the elastic elements consisting of steel springs is made by known mechanical fastening means or by welding.

The main advantages of the invented device reside in that the arms are allowed to move in any direction and in any plane, without being engaged with fixed rotation centers; that the elastic characteristic of the joint is variable even for small transmitted movements; that the elastic elements are not subject to high overheating; that the damping effect is satisfactorily constant under ambient temperature variations; that the joint reacts to the twist movements of the arm with a remarkably low couple, so that remarkable bending of the sub-conductors is prevented in correspondence with the clamps when movements of the sub-conductors rise that twist the arms; that the elastic elements are working without sliding on any surface of the device so that there is no friction between said parts.

Embodiments of the invented device are described herebelow, as an example only, with reference to the attached drawings wherein:

Fig. 1 is an assembly view of a spacer-damper for twin conductor.

Fig. 2 is a front view of a joint of the spacer-damper shown in Fig. 1.

Fig. 3 is a cross section view, according to X—X of Fig. 2.

Fig. 4 is a front view of a joint of the spacer-damper shown in Fig. 1 comprising an alternative in the elastic elements.

Fig. 5 is an assembly view of half the spacer-damper for twin conductor according to a second alternative.

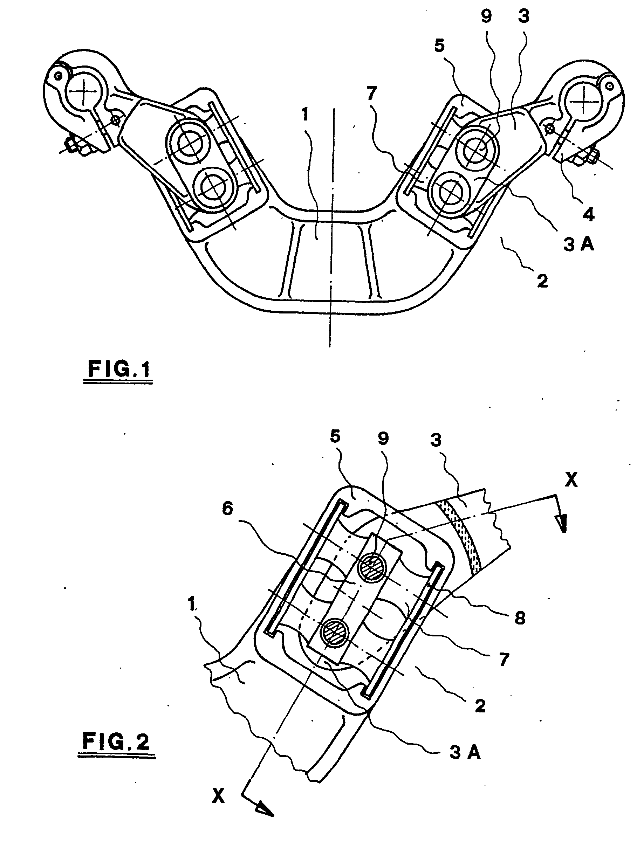

Fig. 1 shows a support 1 that bears at each end a joint 2 for an arm 3 which comprises a clamp 4 adapted to clamp a subconductor not shown. Other parts of the joint are referred to by numbers shown in the following Figures.

Fig. 2 shows an end of the support 1, a rectangular outline frame 5, a core 6 having rectangular cross section positioned within the frame 5, four elastic elements 7 in the form of concave cylinders made of elastomer, each of them having one end glued onto the core and the other end glued onto a little plate 8 forced into a slot in the inner part of the frame 5, a branch 3A of the fork of an arm 3 (the other branch is not shown), the fork being rigidly fixed to the core 6 by means of two rivets 9, each passing through a hole in the core 6. The periphery of the core 6 is spaced from the inner perimeter of the frame 5 in order to allow the core itself to freely twist in the plane of the Figure and in the planes perpendicular with the Figure.

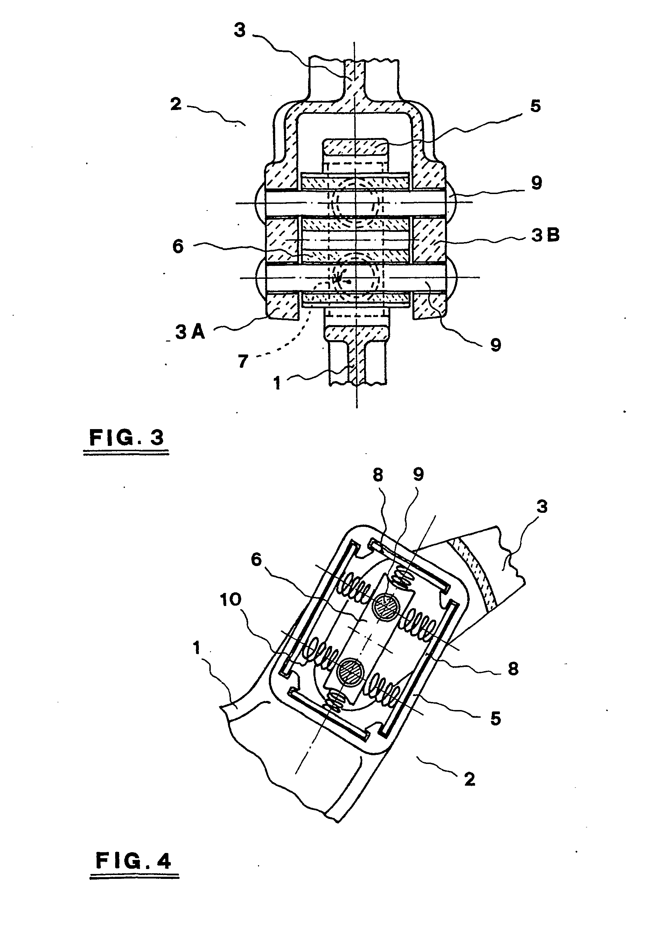

Fig. 3 shows all the parts as indicated in the Fig. 2 and shows completely the fork of the arm 3 together with its two branches 3A, 3B. Fig. 3 also shows that the core 6 projects out of both the sides of the frame 5 in order to allow the arm 3 to freely twist in the plane of the Figure together with the core 6.

Fig. 4 shows a joint 2 comprising six elastic elements 10 made as steel spiral springs, conveniently fixed to little plates 8 forced into slots in the inner part of the frame 5 and to the core 6, the elastic elements being symmetrically spaced around the core itself.

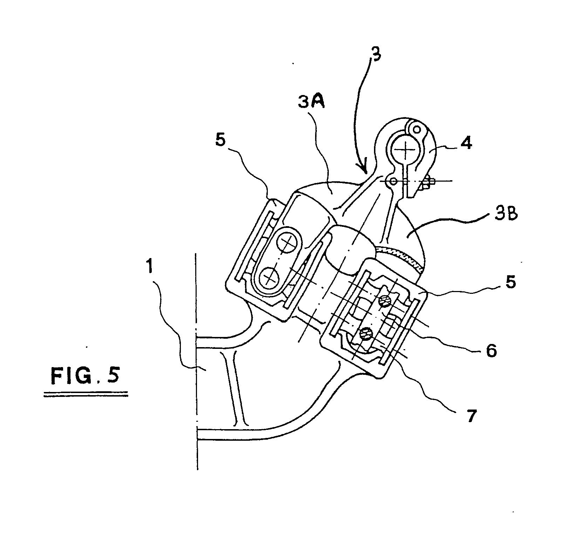

Fig. 5 shows a joint between the support 1 and an arm 3, the joint being composed by two frames 5, both of them being contained in a plane containing the support 1; the arm 3 forks at the bottom in two branches 3A, 3B each being fixed to a core 6 elastically held in a relevant frame 5 by means of elastic elements 7, as it has been already described.

The support 1, the frames 5, the cores 6, the little plates 8 and the arms 3 are of aluminium alloy.

It will be realized that the frames of the joint 2 will be of any shape, circular, oval, polygonal, adapted to the purpose and that the support 1 will be of different shapes, each shape being suitable to the quantity of arms 3 that the support bears, depending on whether the conductor of the relevant electric line is a bundle made of two, three, four or more sub-conductors.

## Claims

1. A spacer-damper for a bundle of at least two sub-conductors of an electric line having a support (1) provided with at least two joints (2) each for articulately connecting said support (1) with a clamp bearing arm (3) and each comprising at least one frame (5) integral with or fixed to the support, a core element (6) held elastically within each frame (5) by a plurality of elastic elements (7) being symmetrically spaced around the periphery of the core each having one end fixed to the inner wall of the frame (5) and the opposite end fixed to the facing wall of the core element (6), said clamp bearing arm (3) having one end fixed to at least one core element (6) and the opposite end bearing a clamp (4) for clamping a sub-conductor said arm being allowed to move elastically within the frame characterized in that the plane containing each frame (5) is parallel with the plane containing the support (1) and is perpendicular to the sub-conductors of the bundle, the elastic elements (7) so lying with their center lines (I—I) perpendicular to the sub-conductors for working in compression, tension, bending and twisting under the actions that the relevant sub-conductor transmits to the relevant arm (3) in any direction.

2. A spacer-damper according to claim 1 characterized in that preferably two pairs of elastic elements (7) are located in each said frame (5), symmetrically arranged about said core element (6).

3. A spacer-damper according to claim 1 characterized in that said support (1) and said frames (5) are located in a common plane.

4. A spacer-damper according to claim 1 characterized in that each joint (2) includes a pair of frames (5), a core element (6) located within each said frame (5) and connected with the relevant clamp bearing arm (3) and at least one pair of elastic elements (7) between each core element (6) and each frame (5) of said joint (2).

5. A spacer-damper according to claim 4 characterized in that the clamp bearing arm (3) associated with the relevant joint (2) has a pair of branches (3A, 3B) each of which is connected with a relevant core element (6) within a relevant frame (5).

6. A spacer-damper according to claim 1 characterized in that said elastic elements (7) are substantially cylindrical elements of elastomeric materials.

7. A spacer-damper according to claim 1 characterized in that the elastic elements (7) are helical steel springs.

## Patentansprüche

1. Ein Abstands-Dämpfer für ein Bündel zumindest zwei Unterleitern einer elektrischen Leitung mit einem Träger (1), welcher mit mindestens zwei Verbindungen (2) ausgebildet ist, deren jede dazu dient, den genannten Träger (1) mit einem Tragarm (3) für eine Klemme beweglich zu verbinden und deren jede zumindest einen Rahmen (5), welcher mit dem Träger einstückig ist oder mit diesem fest verbunden ist, ein Kernelement (6), welches innerhalb jedes Rahmens (5) durch eine Vielzahl von elastischen Elementen (7), die sich symmetrisch längs des Umfanges des Kernes voneinander im Abstand befinden und deren eines Ende an der inneren Wand des Rahmens (5) und das gegenüber liegende Ende an der Stirnwand des Kernelementes (6) befestigt ist, elastisch gehalten ist, aufweist, wobei der genannte Tragarm (3) für die Klemme ein Ende hat, das mit zumindest einem Kernelement (6) fest verbunden ist und das gegenüber liegende Ende eine Klemme (4) für die Klemmung eines Unterleiters trägt, wobei der genannte Arm innerhalb des Rahmens elastisch bewegbar ist, dadurch gekennzeichnet, daß die Ebene jedes Rahmens (5) parallel zur Ebene des Trägers (1) und rechtwinkelig zu den Unterleitern des Bündels ist, die elastischen Elemente (7) mit ihren Mittelachsen (I—I) so senkrecht zu den Unterleitern liegen, um unter den Wirkungen, welche der betreffende Unterleiter auf den zugeordneten Arm (3) in jeglicher Richtung überträgt, unter Druck, Zug, Biegung und Torsion zu arbeiten.

2. Ein Abstands-Dämpfer gemäß Patentanspruch 1, dadurch gekennzeichnet, daß sich vorzugsweise in jedem Rahmen (5) zwei Paare von elastischen Elementen (7), welche um das genannte Kernelement (6) symmetrisch angeordnet sind, befinden.

3. Abstands-Dämpfer nach Anspruch 1, dadurch gekennzeichnet, daß sich der genannte Träger (1) und die genannten Rahmen (5) in einer gemeinsamen Ebene befinden.

4. Ein Abstands-Dämpfer nach Anspruch 1, dadurch gekennzeichnet, daß jede Verbindung (2) ein Paar von Rahmen (5), ein Kernelement (6), welches sich innerhalb jedes genannten Rahmens (5) befindet und mit dem zugeordneten Tragarm (3) für eine Klemme verbunden ist, und zumindest ein Paar von elastischen Elementen (7) zwischen jedem Kernelement (6) und jedem Rahmen (5) der genannten Verbindung (2) enthält.

5. Ein Abstands-Dämpfer nach Anspruch 4, dadurch gekennzeichnet, daß der Tragarm (3) für die Klemme, welcher der betreffenden Verbindung (2) zugeordnet ist, mit einem Paar von Armen (3A, 3B) ausgebildet ist, wobei jeder derselben mit einem zugeordneten Kernelement (6) innerhalb des betreffenden Rahmens (5) verbunden ist.

6. Ein Abstands-Dämpfer nach Anspruch 1, dadurch gekennzeichnet, daß die elastischen Elemente (7) im wesentlichen zylindrische Elemente aus elastomerem Material sind.

7. Ein Abstands-Dämpfer nach Anspruch 1, dadurch gekennzeichnet, daß die elastischen Elemente (7) wendelförmige Stahlfedern sind.

## Revendications

1. Entretoise-amortisseur pour un faisceau d'au moins deux sous-conducteurs d'une ligne électrique, comprenant un support (1) muni d'au moins deux joints (2), dont chacun est destiné à relier ledit support (1) à un bras porte-pince (3) par une liaison articulée, et dont chacun comprend au moins un cadre (5) intégré ou fixé au support, un noyau (6) maintenu élastiquement dans chaque cadre (5) par une pluralité d'éléments élastiques (7) qui sont espacés symétriquement autour de la périphérie du noyau, et dont chacun possède une extrémité fixée à la paroi intérieure du cadre (5) et l'extrémité opposée fixée à la paroi du noyau (6) qui lui fait face, ledit bras porte-pince (3) ayant une extrémité fixée à au moins un noyau (6), tandis que son extrémité opposée porte une pince (4) destinée à serrer un sous-conducteur, ledit bras pouvant se déplacer élastiquement dans le cadre, caractérisée par le fait que le plan qui contient chaque cadre (5) est parallèle au plan qui contient le support (1) et est perpendiculaire aux sous-conducteurs du faisceau, les éléments élastiques (7) étant disposés, avec leurs axes (I—I) perpendiculaires aux sous-conducteurs pour travailler en compression, tension, flexion et torsion sous les actions que le sous-conducteur correspondant transmet au bras respectif (4) dans une direction quelconque.

2. Entretoise-amortisseur selon la revendication 1, caractérisée par le fait que, de préférence, deux paires d'éléments élastiques (7) sont placées dans chaque cadre (5), disposées symétriquement de part et d'autre dudit noyau (6).

3. Entretoise-amortisseur selon la revendication 1, caractérisée par le fait que ledit support (1) et lesdits cadres (5) sont placés dans un même plan.

4. Entretoise-amortisseur selon la revendication 1, caractérisée par le fait que chaque joint (2) comprend une paire de cadres (5), un noyau (6) logé dans chaque cadre (5) et relié au bras porte-pince (3) afférent, et au moins une paire d'éléments élastiques (7) interposée entre chaque noyau (6) et chaque cadre (5) dudit joint (2).

5. Entretoise-amortisseur selon la revendication 4, caractérisée par le fait que le bras porte-pince (3) associé au joint (2) afférent possède une paire de branches (3A, 3B), dont chacune est reliée à un noyau afférent (6) contenu dans un cadre (5) correspondant.

6. Entretoise-amortisseur selon la revendication 1, caractérisée par le fait que lesdits éléments élastiques (7) sont des éléments sensiblement cylindriques faits d'une matière élastomère.

7. Entretoise-amortisseur selon la revendication 1, caractérisée par le fait que les éléments élastiques (7) sont des ressorts hélicoïdaux en acier.

EP 0 104 514 B1

FIG.1

FIG.2

**FIG. 3**

**FIG. 4**

FIG. 5